# EUROPEAN PATENT APPLICATION

(11) **EP 3 067 108 A1**
(43) Date of publication of application: **14.09.2016**
(21) Application number: 15158681.5
(22) Date of filing: 11.03.2015
(51) Int. Cl.: B01D 53/14, B01D 53/18, C10L 3/10, F23J 15/00

(54) **Acid gas removal with an absorption liquid that separates in two liquid phases**

(71) Applicant: Nederlandse Organisatie voor toegepast- natuurwetenschappelijk onderzoek TNO, 2595 DA 's-Gravenhage (NL)
(72) Inventor: Earl Lawrence Vincent Goetheer, 2595 DA 's-Gravenhage (NL); Purvil Maganlal Khakharia, 2595 DA 's-Gravenhage (NL); Annemieke van de Runstraat, 2595 DA 's-Gravenhage (NL); Robrecht Wouter van der Stel, 2595 DA 's-Gravenhage (NL)
(74) Representative: V.O.

(57) **Abstract**

An apparatus and method for acid gas removal using an absorption liquid comprising two liquid components, each absorbing acid gas, wherein in embodiments regeneration of the absorption liquid involves separating the two components from each other in separate streams, and causing desorption from each stream using different desorption conditions.

## Description

The invention relates to a method for reducing the content of acid gases in a gaseous mixture, such as at least one gaseous component selected from the group consisting of CO₂ and H₂S, and to an apparatus for such process.

Many gaseous streams require the removal of acid gasses, such as CO₂, H₂S, and/or organosulphur compounds. Examples include acid gas removal from natural gas, flue gas, biogas and (shifted) syngas, either for upgrading the gas or to mitigate climate change.

More in particular, more than 50 % of the current gas fields in operation contain high amounts of CO₂ and H₂S (more than 3 vol.%). As demand for natural gas is increasing, there is more pressure on the development of additional gas fields. These gas fields contain even higher CO₂ and H₂S levels and are so-called sour gas fields which can be in small volumes at remote locations, so-called marginal fields. With the currently available technologies it is not economically viable to exploit these gas fields. Therefore, significant cost reduction in the treatment steps is desirable. Both capital and operational cost need to be reduced before these sour gas fields can be commercialised.

Another application where removal of acid gases is desirable is for (shifted) syngas where the desired product gas is hydrogen. Also here high concentrations of CO₂ are present, often in combination with H₂S, posing the same kind of challenges cost wise as for sour gas fields.

Common approaches to remove CO₂, H₂S, and organosulphur compounds include cryogenic or low temperature separation, membrane based separation, absorption, and adsorption. Of these options, absorption is the most commonly used approach for bulk removal. Adsorption is more commonly used for polishing of organosulphur compounds. Absorption solvents are commonly classified in the following three categories: physical absorption solvents (the gas component of interest is absorbed in the solvent by means of its solubility in the solvent), reactive absorption solvents (an active component reacts with the gas component of interest forming a product via a reversible reaction), and a hybrid of physical and reactive absorption solvents.

Physical solvents have some important advantages. For example, the absorption capacity of physical solvents for a species is linearly dependant on pressure of that species which makes them suited for high acid gas (partial) pressures. Regeneration is done without heating, but with pressure release only. Disadvantages of physical solvents are that often cooling is needed to increase capacity and prevent large circulation volumes of liquid. And even with such cooling circulation volumes for physical solvents are substantial, thereby leading to substantial operation costs. A review of physical absorption for CO₂ capture is given in Ban et al., Advanced Materials Research 2014, 917, 134-143. The main disadvantage of physical solvents is that they alone cannot provide low partial pressure (deep removal) of acid gasses and hence chemical solvents are typically used for such purpose, for instance to meet the CO₂ specifications of liquefied natural gas (LNG) or to remove H₂S to gas pipe line specifications.

Typically, natural gas is treated such that it meets either pipeline or liquefied natural gas (LNG) specifications, with the latter having stricter limits. The exact specifications for pipeline and liquefied natural gas are similar worldwide and vary only slightly depending on the local authorities. In order to meet the pipeline specifications, gas streams with high CO₂ and H₂S content all the above-mentioned options can be used. However, only reactive absorption solvents (either alone or in a two step process with physical absorption solvents) are suitable in order to meet the liquefied natural gas specifications. One of the disadvantages of using reactive absorption solvents is their higher energy requirement for solvent regeneration as compared to physical absorption solvents. Physical solvents can be regenerated easily by a pressure swing, while the chemical solvents require thermal stripping. This leads to an increased operational cost. Accordingly, there is a need in the art for solvent systems which can meet the specifications at lower operational cost.

WO-A-2004/047955 discloses a process for the removal of hydrogen sulphide, mercaptans and optionally carbon dioxide and carbonyl sulphide from a gas stream comprising such compounds. The process is a two step process. The first step is a physical/chemical absorption process wherein part of the hydrogen sulphide, carbon dioxide and mercaptans are removed with a washing solution comprising a physical solvent and an amine chemical solvent. The preferred physical solvent is sulpholane. The second step is a solid adsorption step wherein the remaining hydrogen sulphide, carbon dioxide and mercaptans are removed by means of molecular sieves. These solvent systems remain monophasic throughout the process conditions and separation of two loaded liquids from each other is not disclosed.

Teng et al., Gas Separation & Purification 1991, 5(1), 29-34 describe a mixed solvent containing chemical and physical solvents which can be used to remove acid gases from gas stream. Separation of two loaded liquids from each other is not disclosed.

Generally, monophasic homogenous solvents are used as absorption liquid. Phase separation of the absorption liquid is generally avoided, since this tends to introduce technical complexity. However, some processes involving biphasic, or phase-separable solvents have been reported.

US-A-2009/0 199 709 discloses a method of deacidising a gaseous effluent comprising contacting the effluent with an absorbent solution selected for its property of forming two separable liquid phases when it has absorbed acid compounds and when it is heated, and heating the loaded solution divides into two liquid fractions, the first depleted and the second enriched in acid compounds. After heating the fractions are separated. The second fraction is regenerated, while the first fraction and the regenerated solution are recycled.

US-A-2014/0 178 279 describes a liquid aqueous CO₂ absorbent comprising two or more amine compounds, where a first aqueous solution having absorbed CO₂ is not, or only partly miscible with a second aqueous solution of amines not having absorbed CO₂. The absorbent comprises a tertiary amine and a primary and/or secondary amine. A method of capturing CO₂ comprises contacting CO₂ rich gas with such absorbent and allowing the absorbent to separate into a rich and a lean phase, and regenerating the rich phase. Key to the invention described in this patent application is the combination of the absorption rate of a secondary or primary amine with the low heat of absorption of a tertiary amine.

US-A-2010/0 288 126 is directed to a process for separating CO₂ from gas stream, wherein the CO₂ is removed from the CO₂ absorbing agent by means of phase separation, the absorbent comprising at least one secondary and at least one tertiary amine and at least one specific primary amines. In accordance with this process, there is a CO₂ absorption agent that can be phase separated into a non-aqueous phase and a CO₂-rich aqueous phase upon heating.

US-A-4 241 032 describes a process for the treatment of gases which, in addition to a relatively high CO₂ content, also contain, also contain a low hydrogen sulphide content and carbonyl sulphide and/or mercaptans in such a way that the gas mixture obtained after regeneration of the loaded liquid absorbent can be processed into elemental sulphur in a sulphur recovery unit. Separation of two loaded liquids from each other is not disclosed.

These known processes still suffer from one or more disadvantages, such as having undesirably high capital expenditure and/or operational expenditure, and not being able to meet product gas or acid gas specifications without further extended treatment. Accordingly, there remains a need in the art to provide a process which addresses these shortcomings of the prior art. In particular, it is desired to combine the advantageous properties of physical and chemical solvents, in order to provide a flexible process that can be used over a broad range of acid gas partial pressures.

An objective of the invention is to provide a method and apparatus that address the above-mentioned problems.

It has surprisingly been found that this objective can be met at least in part by a method using absorption liquid comprising a first liquid component and a second liquid component, the method involving subjecting different streams to different desorption conditions.

Accordingly, in a first aspect the invention is directed to a method for reducing the content of at least one gaseous component selected from the group consisting of CO₂ and H₂S of a gaseous mixture comprising such component, comprising
- contacting in an absorption zone said gaseous mixture with absorption liquid, wherein said absorption liquid comprises a first liquid component and a second liquid component, thereby causing absorption of at least some of said gaseous component from said gaseous mixture into said first liquid component and into said second liquid component, yielding a stream of absorption liquid comprising a thus absorbed component, wherein said stream of absorption liquid is phase separated in a first phase predominantly comprising said first liquid component and a second phase predominantly comprising said second liquid component,
- separating said first phase and said second phase at least partly from each other to yield a first liquid stream comprising first liquid component and absorbed component and a second liquid stream comprising second liquid component and absorbed component, and
- desorbing under first desorption conditions said absorbed component from said first liquid stream in a first desorption step yielding a first released desorbed component and a regenerated first stream, and desorbing under second desorption conditions which are different from said first desorption conditions said absorbed component from said second liquid stream in a second desorption step yielding a second released desorbed component and a regenerated second stream,
wherein the first liquid component is a chemical solvent and wherein the second liquid component is not a chemical solvent, and wherein the first liquid component and the second liquid component have different desorption characteristics for said gaseous component.

Advantageously, the method of the invention results in significant energy savings and increased performance. Further advantages of the process include a combination of bulk removal and further removal to low partial pressure of the gaseous acidic component in a single step, for instance such that liquefied natural gas specifications can be met. Hence, the process may allow for reduction of an acidic component, such as CO₂, from relatively high to very low partial pressures. This can make exploitation of marginal and/or highly sour natural gas fields viable. Further, it can be a pre-step in preparing a light, gaseous, hydrocarbon stream for transformation to higher, liquid or solid, hydrocarbons which can be transported much more easily. The process is particularly advantageous for streams having relatively high partial pressures of acidic components, such as in natural gas, biogas, and (shifted) syngas applications. Additionally, the invention allows an enrichment of H₂S in the chemical phase relative to non-chemical phase, thereby making the stripper exit stream more suited for a Claus process. The valuable higher hydrocarbons (and H₂) will preferentially end up in the phase with the non-chemical solvent. This means that these can be released and recovered in a flash.

The absorption liquid comprises a first liquid component and a second liquid component. The first liquid component has desorption characteristics for said gaseous component which are different from those of the second liquid component. Preferably, the absorption characteristics for said gaseous component of the first liquid component are also different from those of the second liquid component. Hence, at least one desorption characteristic and preferably at least also one absorption characteristic, is different between the first and second liquid component.

The different desorption characteristics (such as desorption temperature and desorption pressure) allow for different conditions to be used for causing desorption of the absorbed component from each liquid component.

Herein, liquid includes suspensions, emulsions (including micellar systems), solutions, and foams. The absorbent species of a component may, for instance, be dissolved in a liquid carrier. Liquid refers to the phase at 20 °C and 1 bar and/or at operating conditions in the absorption zone.

The first and the second component are both capable of reversibly absorbing gaseous components, such as CO₂ and/or H₂S, from a gaseous mixture. Physical and chemical solvents are commonly used for deacidification. In accordance with the invention, the first liquid component is a chemical solvent and the second liquid component is not a chemical solvent (*i.e*. a physical solvent). Such solvents are well-known in the art.

The first and second liquid components are preferably selected such that they have at least a first combination of a first temperature, first pressure and first loading of absorbed components where they do not phase separate (*i.e*. where a mixture of both is monophasic), and have at least a second combination of a second temperature, second pressure and second loading, where they do phase separate. It is also possible that the first and second liquid components are selected such that at a first combination of a first temperature, first pressure and first loading of absorbed components they phase separate less than at a second combination of a second temperature, second pressure and second loading of absorbed components. Preferably, absorption of at least one gaseous component induces phase separation (or causes an increase in phase separation), whereas desorption induces the disappearance of phase separation (or causes a decrease in phase separation).

In an embodiment, the first liquid component and the second liquid component are already phase separated in the absorption liquid prior to absorbing at least one gaseous component. Hence, the phase separated stream of absorption liquid after the absorption step does not necessarily have to be a result of the absorption step, but the absorption liquid fed to the absorption zone may already be a phase separated absorption liquid. It is preferred, however, that the first liquid component and the second liquid component do not phase separate prior to absorbing gaseous components. More preferably, the absorption liquid fed to the absorption zone is essentially monophasic (*viz*. there may still be an insignificant amount of phase separation, such as 1 vol.%). Even more preferably, the absorption liquid fed to the absorption zone is monophasic. In any case, upon absorption a phase separated system has developed with a first phase predominantly comprising the first liquid component and further comprising at least some of said gaseous component in absorbed form, and a second phase predominantly comprising the second liquid component and further comprising at least some of said gaseous component in absorbed form.

Preferably, the first liquid component and the second liquid component are selected such that, individually, they would not phase separate during the contacting step or during the separation step. Hence, preferably, the separation step does not involve phase separation of the first liquid component, or phase separation of the second liquid component.

Hence, in embodiments of the apparatus and method for acid gas removal, an absorption liquid comprising two liquid components, each absorbing acid gas is used, wherein regeneration of the absorption liquid involves separating the two components from each other in separate streams, and causing desorption from each stream using different desorption conditions.

Preferably, the first liquid component is a chemical solvent and the second liquid component is not a chemical solvent for the at least one gaseous component selected from the group consisting of CO₂ and H₂S. Preferably, the second liquid component is a physical solvent for the at least one gaseous component selected from the group consisting of CO₂ and H₂S.

The term "chemical solvent" as used in this application is meant to refer to a solvent that selectively removes an unwanted species from a stream containing the species, like CO₂ from a gaseous mixture, on reacting with a chemical base present in the solvent. Thus, the chemical solvent is a solvent that absorbs at least some of at least one gaseous component through a chemical reaction with said gaseous component. Since the chemical bond is relatively strong, although reversible, a chemical solvent can be used to bind even at low concentrations of the said gas components in the gas phase.

The term "non-chemical" as used in this application is meant to refer to any solvent that is a physical solvent. More in particular, a physical solvent can be defined as a solvent which absorbs a species from a stream containing the species, like CO₂ from a gaseous mixture, without depending on a chemical reaction with said unwanted species. Thus, the physical solvent is a solvent that absorbs at least some of the gaseous component without depending on a chemical reaction with said gaseous component. Since the species does not react chemically it is bound more weakly, which makes it easier to remove. The terms "physical solvent" and "non-chemical solvent" as used in this application may be used interchangeably.

Preferably, the chemical solvent comprises compounds capable of reacting with CO₂ and/or H₂S (and optionally other organosulphur compounds) and/or the absorbed or dissolved species thereof. The reaction is reversible, for instance by heating. Preferably, the chemical solvent comprises compounds capable of forming covalent and/or ionic bonds with CO₂ and/or H₂S and/or the absorbed or dissolved species thereof.

In an embodiment, the method of the invention not only reduces the content of CO₂ and/or H₂S in the gaseous mixture, but further reduces the content of at least one gaseous component selected from the group consisting of organosulphur compounds and mercaptanes that are comprised in the gaseous mixture. These gaseous components can be predominantly removed by the non-chemical solvent.

Co-absorption of hydrogen and hydrocarbons is not preferred. However, in case these gaseous components are (partly) co-absorbed, then in accordance with the invention these components predominantly are absorbed in the non-chemical solvent.

Preferably, the first liquid component comprises one or more compounds selected from primary, secondary, tertiary, cyclic or acyclic amines, aromatic or non-aromatic amines, saturated or non-saturated amines, substituted or unsubstituted amines, alkanolamines, polyamines, amino-acids, amino-acid alkaline salts, amides, ureas, alkali metal phosphates, carbonates or borates, preferably compounds comprising an amine function.

Some suitable amines include 2-amino-ethanol, diisopropylamine, diethanolamine, diethylethanolamine, triethanolamine, aminoethoxyethanol, 2-amino-2-methyl-1-propanol, dimethylaminopropanol, methyldiisopropanolamine, aminoethylpiperazine, piperazine, 2-amino-1-butanol, methyldiethanolamine, and any mixture thereof. Preferably, the first liquid component is present as an aqueous solution (such as an aqueous solution of one or more of the above amines). Suitably, therefore, the first liquid component comprises water. In an embodiment, the first liquid component comprises two or more different molecules, such as three or more different molecules.

Some examples of suitable non-chemical solvents include polyhydric alcohols typified by ethylene glycol, propylene glycol, diethylene glycol, triethylene glycol, polyethylene glycol, thiodiglycol, dithiodiglycol, 2-methyl-1,3-propanediol, 1,2,6-hexanetriol, acetylene glycol derivatives, glycerin and trimethylolpropane; lower alkyl ethers of a polyhydric alcohol such as ethylene glycol monomethyl (or ethyl) ether, diethylene glycol monomethyl (or ethyl) ether and triethylene glycol monoethyl (or butyl) ether; sulphur-containing compounds such as sulpholane, dimethylsulphoxide and 3-sulpholane.

The non-chemical solvent can, for instance, be selected from the group consisting of sulpholane (cyclotetramethylenesulphone) and its derivatives, aliphatic acid amides, *n*-methylpyrrolidone, *N*-alkylated pyrrolidones and corresponding piperidones, methanol and mixtures of dialkylethers of polyethylene glycols.

More in particular, the non-chemical solvent may be selected from the group consisting of sulpholane (tetrahydrothiophene dioxide), 3-methylsulpholane, dimethylsulphoxide, thiodiglycol, dithiodiglycol, *N*-methylpyrrolidone, methanol, tributyl phosphate, *N*-β-hydroxyethylmorpholine, propylene carbonate, methoxytriglycol, dimethyl ether of polyethylene glycol, and mixtures of polyethylene glycol dialkyl ethers. In a preferred embodiment, the non-chemical solvent is selected from the group consisting of sulpholane, 3-methylsulpholane, dimethylsulphoxide, thiodiglycol, dithiodiglycol, tributylphosphate, *N*-β-hydroxyethylmorpholine, propylene carbonate, methyxotriglycol, dimethylether of polyethylene glycol, water, and mixtures of polyethylene glycoldialkyl ethers.

Preferably, the first liquid component comprises a protic solvent and the second liquid component comprises an aprotic component.

Preferably, the mass ratio of the first and second liquid component in the absorption liquid is in the range of 10:1 to 1:1,0 first liquid component to second liquid component. The exact mass ratio between the first liquid component and the second liquid component can be tuned in order to optimise the process for each gas feed and/or specifications on the product gas.

Preferably, first liquid component comprises an aqueous solution of an amine compound and the second liquid component comprises sulpholane.

The invention relates to a method for reducing the content of a gaseous component, selected from the group consisting of CO₂ and H₂S, of a gaseous mixture comprising such component. Hence, for example the method is a method of acid gas removal or gas sweetening. Further gaseous components of which the content in the gaseous mixture may be reduced include carbonyl sulphide, thiols, and/or organic sulphides, which may also be such gaseous components. In principle, the method can be used for any gaseous component to be removed, at least partly, from a gas stream. Preferably, the content of both CO₂ and H₂S is reduced.

The gaseous mixture preferably comprises one or more combustable gases such as hydrocarbons, for instance methane, or hydrogen. The gaseous mixture is often a feed stream. Such feed stream may for instance comprise natural gas, flue gas, biogas, combustion gas, Claus tail gas, and/or synthesis gas, and shifted synthesis gas, for example produced by gasification of coal, coke, or heavy hydrocarbon oils. The feed stream may also be conversion gas in an integrated coal or natural gas combustion plant, or gas resulting from biomass fermentation. The gaseous component to be absorbed comprises CO₂ and/or H₂S, preferably both, and may optionally comprise carbonyl sulphide, thiol compounds (mercaptans), and/or thiophenols and aromatic sulphur compounds. In some embodiments, the component is not acidic and/or not gaseous during all process steps, in particular when absorbed. Hence, the component is also referred to as absorbed component.

The method comprises contacting said gaseous mixture with absorption liquid in an absorption zone, preferably a contactor. For example, conventional types of gas-liquid contactors can be used, such as a packed column. The absorption liquid can be applied for example as one or more mixed streams wherein the first and the second component are mixed, or the first and second component can at least partly be supplied in separate stream. Preferably, the gaseous stream and the absorption liquid move in counter-current flow through a contactor, with for instance the gaseous stream moving upward and being released from the top and the absorption liquid being withdrawn at the bottom of the contactor. Hence, the gaseous mixture can be scrubbed with absorption liquid. Absorption liquid is preferably supplied as separate first and second liquid streams at different position in an absorption column used as contactor. The packing of the absorption column may be divided in different serially connected sections having a packing adapted to the different absorption liquid components present and introduced in that packing. Absorption liquid may trickle through the packing downwards while absorbing CO₂ from the gaseous mixture. In the absorption zone absorption liquid may be a substantially homogenous liquid or may comprise some discontinuous phase, such as a not or partly miscible liquid phase. The absorption liquid may also be multiphasic, when lean in CO₂, depending on the first and second liquid component, for instance upon entry of the absorption zone. In case the components are added to the absorption zone separately, the first and the second liquid stream preferably do not phase separate under the conditions and in the composition as of their entry in the absorption zone.

A treated gaseous mixture, for instance a treated gas stream, is obtained wherein at least the concentration of CO₂ and/or H₂S (and optionally further acid gaseous components) is reduced. For example, depending on the required specifications on the product gas and the amount of CO₂ in the product gas the partial pressure of CO₂ can be reduced by 60 % or more, or 80 % or more, or 95 % or more, preferably 99 % or more, or 99.5 % or more, or even 99.8 % or more, such as 99.9 % or more based on partial pressure of CO₂ directly prior to contacting. Preferably, the partial pressure of H₂S is reduced by 60 % or more, or 80 % or more, or 95 % or more, preferably 99 % or more, or 99.5 % or more, or even 99.8 % or more, such as 99.9 % or more, based on partial pressure of H₂S directly prior to contacting. Preferably, the partial pressure of both is reduced by such amounts. The concentration of CO₂ in the final product stream so obtained is preferably 2 vol.% or less (pipe line specs) or 50 ppmv or less (LNG specs). The concentration of H₂S in the final product stream so obtained is preferably 4 ppmv or less.

The content of one or more other gaseous components may be reduced as well. As mentioned, the method can also be used as well for reducing the content of gaseous components other than CO₂ and/or H₂S. The obtained treated gaseous mixture is optionally water washed for solvent recovery. The treated gas stream obtained may, for instance, be suitable for liquefied natural gas, pipeline quality gas, or for release into the atmosphere.

The method involves absorption of at least some of said gaseous component from said gaseous mixture into said first and into said second liquid component, yielding a stream of absorption liquid comprising a thus absorbed component. In particular, in the stream, both the first liquid component and the second liquid component comprise the absorbed component.

The method comprises reducing the content of at least one gaseous component selected from the group consisting of CO₂ and H₂S of a gaseous mixture comprising such component by such absorption.

For example, the gaseous component such as CO₂ may be absorbed in the first liquid component and the second liquid component. Absorption may involve dissolving of the gaseous component in the liquid component, and/or chemical reactions of the liquid component with the gaseous component or the dissolved species thereof. For instance, in case of an aqueous amine solution is used as chemical solvent, amines may react with CO₂ and/or dissolved species thereof, for example to form carbamate or carbonate species. Accordingly, absorption broadly relates to transfer of gaseous components form the gaseous mixture into the liquid, such that the absorbed components can be withdrawn from the absorption zone by withdrawal of the absorption liquid therefrom.

Preferably, the absorption liquid stream with the absorbed component therein is withdrawn from the absorption zone. In accordance with the invention, the stream of absorption liquid is phase separated in a first phase predominantly comprising the first liquid component and a second phase predominantly comprising the second liquid component.

The method comprises separating the first phase and the second phase at least partly from each other to yield a first liquid stream comprising first liquid component and absorbed component and a second liquid stream comprising second liquid component and absorbed component. Preferably, the first liquid stream and second liquid stream are physically separated from each other, and are transported through different channels, which channels are for example at least separated from each other by an impermeable wall. The concentration of the first liquid component and of the second liquid component in the first liquid stream is different from those in the second liquid stream. Preferably, 90 % or more by total weight of the feed stream of the first liquid component is obtained in the first liquid stream and 90 % or more by total weight of the feed stream of the second liquid component is obtained in the second liquid stream. Preferably, the first liquid stream and the second liquid stream individually are each homogeneous liquid streams and are preferably not biphasic. Preferably, the streams consist for 90 % or more by total weight of the stream of a single liquid phase.

Preferably, the concentration of the first liquid component and of the second liquid component in the first liquid phase are different from those in the second liquid phase. For instance, the concentration of the first component in the first stream can be at least ten times higher than the concentration of the first liquid component in the second stream. In case the first liquid component and/or second liquid component comprise multiple compounds, the concentration of each is the total of these compounds. Preferably, 90 % or more by total weight of the first component in the absorption liquid stream is separated into the first stream, and preferably 90 % or more by total weight of the second component is separated into the second stream. Phase separation may for instance be based on a difference in dielectric constant of the first liquid component and second liquid component (one being polar, the other non-polar). In any case, there needs to be an interfacial tension between the two phases for phase separation to occur. Separation may for example be based on a difference in volumetric density of the liquid components.

Inducing phase separation may involve increasing the loading of absorbed component. This may result in the formation of droplets of one or both liquid components. Phase separation may further involve the formation of a liquid-liquid interface between at least two phases of a liquid.

Separation of phases may involve physically removing such phases from each other, such that they no longer have a liquid-liquid interface with each other. Separation may be effected by gravity and/or inertia. The formed phases can be physically separated from each other by providing separate channels, having an inlet at different positions, such that selectively one phase enters a channel. Separation can by carried out by decanting or centrifugation. The separation can be carried out in a pressurised vessel, and may for instance involve a settling tank, a decanter, filtration, or a centrifugal separator such as a centrifuge or a (hydro)cyclone.

The method further comprises desorbing under first desorption conditions the absorbed component from the first stream in a first desorption step yielding a first released desorbed component and a regenerated first stream. The method also comprises desorbing under second desorption conditions the absorbed component from the second stream in a second desorption step yielding a second released desorbed component and a regenerated second stream. Preferably, the first desorption conditions are different from the second desorption conditions. The difference may involve a difference in temperature of 5 °C or more, 20 °C or more, or 50 °C or more, a difference in pressure, a difference in pH, and/or a difference in duration of said desorption step.

Desorbed components, for example CO₂, are released from the first liquid stream and from the second liquid stream. Hence, the regenerated first stream and second stream have a lower concentration of absorbed components than directly after the step of separating the first liquid component and second liquid component from each other. In contrast, for instance in US-A-2010/0 288 126, the concentration of absorbed CO₂ in the organic stream in pump 80, or upon entry of contactor 10, is the same as directly after vessel 50. In US-A-2014/0 178 279, the concentration of absorbed CO₂ in CO₂ lean phase is the same upon withdrawal from separation unit 15 as in cooler 19 and upon entry of the absorber 10.

For example, the first liquid stream comprises 60 % or more, or 90 % or more, by total weight of the first liquid stream of the first liquid component (*i.e*. chemical solvent) and the second liquid stream comprises 60 % or more, or 90 % or more, by total weight of the second liquid stream of the second liquid component (*i.e*. non-chemical solvent), each inclusive of absorbed component. By subjecting both streams separately to different desorption conditions, these conditions can be optimised independently for respectively the first liquid component and second liquid component. Hence, the absorbed component can be desorbed and released from both streams efficiently, thereby regenerating the first liquid component and second liquid component in an energy efficient way. The released first desorbed component and second desorbed component are each separated from each liquid stream and can obtained as separate gaseous stream. The process may comprise recovering of liquid component and/or hydrocarbons from either or both gaseous streams.

Another advantage of having two independent, separate desorption steps on two separate liquid streams is that the level of CO₂ and H₂S may be controlled. For instance, feed sour gas having an undesirable H₂S to CO₂ ratio conventionally requires extra treatment to adjust the H₂S to CO₂ ratio, for H₂S destruction methods such as the Claus process. In this process, at least 15 vol.%, preferably 30 vol.% or more of H₂S is required in the feed gas to the Claus process. Hence, such feed sour gas streams conventionally require pre-treatment. In advantageous embodiments of the method of the invention, large parts of CO₂ can be desorbed from a physical solvent, e.g. using a pressure swing desorption step. In such embodiments, most of the H₂S is likely to be released from the chemical solvent in the thermal stripper in a gas stream which comprises a lower amount of CO₂ (by virtue of CO₂ being absorbed by the physical solvent). This results in a high H₂S/CO₂ ratio. Hence, the gas stream obtained from regeneration of the chemical solvent, *e.g*. from a thermal stripper, can advantageously be sent directly to a Claus unit. Hence, the method preferably comprises supplying a gas stream obtained from a desorption step of a chemical solvent to a Claus unit, wherein the CO₂ concentration of the stream obtained from the desorption step is lower than the CO₂ concentration of the stream supplied to the absorber or feed stream.

Hence, preferably the first released desorbed component comprises CO₂ and H₂S, and the method comprises submitting the first desorbed component to a Claus process without further reduction of the CO₂ concentration of the first desorbed component.

Preferably, the first desorption step comprises thermal regeneration and the second desorption step comprises flashing. This may allow advantageously for regenerating the non-chemical solvent without heating the second liquid stream.

The first liquid component is a chemical solvent, for example an aqueous (alkyl)amine solution. The desorption step of such chemical solvent may comprise thermal stripping, for example in a column. Thermal stripping may comprise reboiling the solvent. The gas stream obtained at the top of the stripper can be cooled and passed through a separating drum, from which a vapour fraction can be discharged and a liquefied fraction can be supplied to upper part of the thermal stripper as reflux. Preferably, heat recovery is applied by heat exchange between the regenerated solvent stream obtained from bottom of the stripper and the solvent stream introduced into the thermal stripper. Prior to a thermal stripping step, for instance upstream of said heat exchange, pressure swing stripping of the liquid stream can optionally be applied, for instance in a flash vessel.

For the non-chemical solvent, the desorption step comprises reducing the pressure. Typically, this pressure reduction is performed in a stepwise manner to have part of the liquid and gas available at higher pressure. Such successively lowering the pressure may for instance be realised by using successive flash tanks.

The desorbed component (in particular CO₂) is typically released, separated from the liquid stream, and obtained as separate (product) gaseous stream. The method may comprise recovering hydrocarbons and non-chemical solvent from the product gaseous stream. The regenerated non-chemical solvent is, for example, cooled and returned back to the absorption zone. Flashing can optionally be combined with heating, for example in case of multiple stages of heating, the temperature can be increased with each stage, for example by using a stripping gas having a temperature which is 10-40 °C higher than the liquid stream in the respective flashing stage.

Preferably, the second desorption step involves no heating of the second liquid stream, or heating the second liquid stream by a temperature increase which is at least 20 °C less than a temperature increase of the second liquid stream during the second desorption step.

The regenerated first liquid stream and second liquid stream can be each reintroduced in the absorption zone. Advantageously, by having two regenerated streams having a different chemical composition and thus, absorption behaviour, the position in the absorption zone where the regenerated streams are introduced can be optimised for each. Hence, the first liquid component and second liquid component can be introduced at different positions in the absorption zone, preferably at different positions relative to the flow of a feed gas stream through the absorption zone.

For example, the non-chemical solvent (or part thereof) can be introduced closer to the (or each in case there are multiple) inlet of a contactor for the gaseous mixture than the chemical solvent (part thereof). In an embodiment, 60 % or more by weight of the non-chemical solvent (such as 90 % or more and preferably all), is introduced closer to the inlet of a contactor for the gaseous mixture than 60 % or more by weight of the chemical solvent (such as 90 % or more and preferably all). Since the non-chemical solvent is especially suitable for bulk removal of CO₂ and/or other gaseous components to be removed at higher partial pressures thereof, this is advantageous. Introducing chemical solvent closer to the outlet of the treated gaseous mixture, where the partial pressure is lower of CO₂ and H₂S, and/or other gaseous components to be removed, utilises the 'polishing' absorption properties of such chemical solvents efficiently. Hence, the contactor can have a bulk removal section (affected by physical solvent, for instance at the bottom of an absorption column) and a deep removal section (affected by chemical solvent, for instance at the top of an absorption column). This allows gas streams containing high amounts of acidic gasses, such as CO₂ (*e.g.* a CO₂ partial pressure of 6 bar or more, such as 8 bar or more, 10 bar or more, 15 bar or more, or even 20 bar or more) to be treated to very low concentrations of those acid gasses, such as CO₂ (for instance to 50 ppmv or less) in a single contactor (such as a single absorption column). The upper section of such an absorption column may advantageously have a smaller diameter, owing to smaller gas and liquid flows, thereby reducing operational costs. Absorption liquid is for instance circulated through the system and can be recovered from any gaseous stream obtained. Make-up lines for absorption liquid, preferably separate for the first and second liquid components, can be used for mitigating any loss of first and second liquid component, especially loss in the treated gaseous stream.

In a further aspect, the invention is directed to an apparatus for performing the method, and to embodiments of the method carried out in such apparatus. The apparatus of the invention comprises
- a contactor comprising an inlet and an outlet for a gaseous stream and at least one inlet and outlet for absorption liquid,
- a separation unit for separating said absorption liquid, comprising an inlet for absorption liquid having a connection to the outlet for absorption liquid of said contactor, a first outlet for a first separated stream and a second outlet for a second separated stream of said absorption liquid,
- a first regeneration unit, preferably a thermal stripper, having an inlet for said first separated stream, said inlet having a connection to said first outlet of said separation unit, and having a first outlet for a gaseous stream and a second outlet having a connection to an inlet for absorption liquid of said contactor, and
- a second desorption unit, preferably a pressure swing vessel, having an inlet for said second separated stream, having a connection to said second outlet of said separation unit, and having a first outlet for a gaseous stream and a second outlet for a first regenerated stream of said absorption liquid, said second outlet having a connection to an inlet for absorption liquid of said contactor.

The apparatus may further optionally comprise a heat exchanger between the contactor and the separation unit, for heating absorption liquid upstream of said separation unit. It is preferred, however, that such heat exchanger is absent. Additionally, the apparatus may further optionally comprise a heat exchanger between the separation unit and the second desorption unit, and/or between the second desorption unit and the contactor.

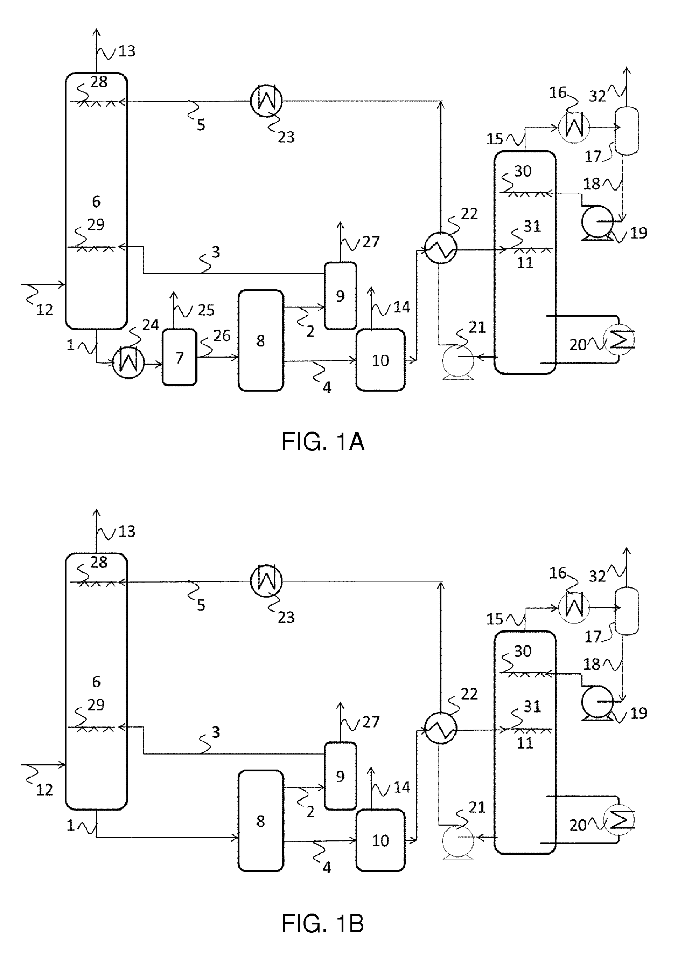

With reference to the schematic process flow diagram in figure 1, an example embodiment of the apparatus (or reactor, or system) comprises a gas-liquid contactor 6, an optional flash vessel 7, a separation unit 8, an optional flash vessel 10, a first desorption unit 11, in this case a thermal stripper column with reboiler 20 and a second desorption unit 9. Feed gas stream 12 is provided to contactor to an inlet and treated gas stream 13 is released through an outlet. Rich absorption liquid is withdrawn from contactor 6 and passed through connection 1 through an optional heat exchanger 24 to an optional flash vessel 7. In optional flash vessel 7, a part 25 of the acid gas is desorbed and released, and the absorption liquid stream 26 is then passed to liquid-liquid separation unit 8. Unit 8 is preferably pressurised and for example a decanter or hydrocyclone. In separation unit 8, the first and second liquid component are separated from each other, into a first stream consisting essentially of the first component, in this case a chemical solvent, and a second stream consisting essentially of the second component, in this case non-chemical solvent. The first stream is passed through channel 4 to optional flash vessel 10, where a part of the absorbed gas is desorbed and released as stream 14, and the remaining part of the first stream is passed to first desorption unit 11, where it is introduced through distributor 31, and where absorbed gas is desorbed, flows upward, and is optionally water washed with water introduced through distributor 30. The washed stream is released through channel 15 to optional cooler 16 and optional flash tank 17, such that a dried gaseous stream 32 comprising CO₂ and/or H₂S is obtained. From flash tank 17, liquid stream 18, in particular washing water, is supplied back to unit 11 using optional pump 19. The second stream is passed through connection 2 to second desorption unit 9, where gas 27 is desorbed, and the regenerated second liquid component is passed through connection 3 to contactor 6. The skilled person understands that in practice, the final treatment of CO₂ and/or H₂S may comprise several cooling, flashing and compression steps. In principle, flashing, cooling and compression may also be applied to gas streams 13, 14, 25, 27 and/or 32. Regenerated first liquid stream is supplied from the bottom of thermal stripper 11 through channel 5 to contactor 6. Pump 21 pumps the liquid through channel 5. Heat exchanger 22 is applied for heat exchange between the stream entering desorption unit 11 (downstream of flash vessel 10) and the stream between desorption unit 11 and contactor 6 (upstream of cooler 23). Gas stream 25 can optionally be supplied directly to a Claus unit (not shown) for H₂S destruction. The apparatus optionally comprises a water wash section (not shown) for stream 13 for absorption liquid recovery and a demister, for example integrated in the column of contactor 6. Contactor 6 comprises separate distributors (28, 29) for the first and second liquid stream. Reboiler 20 may optionally involve amine reclaiming by heating, optionally in the presence of acid, to liberate insoluble amine salts. Sensible heat demand of reboiler 20 is reduced compared to a system without separator 8 and desorption unit 9.

A simple embodiment of the apparatus comprises only units 6, 8, 9, 10, and 11 and connections 1-5. As shown, connections 2 and 4 are separate channels.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.*, meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (*e.g*., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include and intermediate ranges therein, which may or may not be specifically enumerated herein.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description features are described herein as part of the same or separate embodiments, however, it will be appreciated that the scope of the invention may include embodiments having combinations of all or some of the features described.

The invention will now be further illustrated by the following non-limiting examples.

### Example

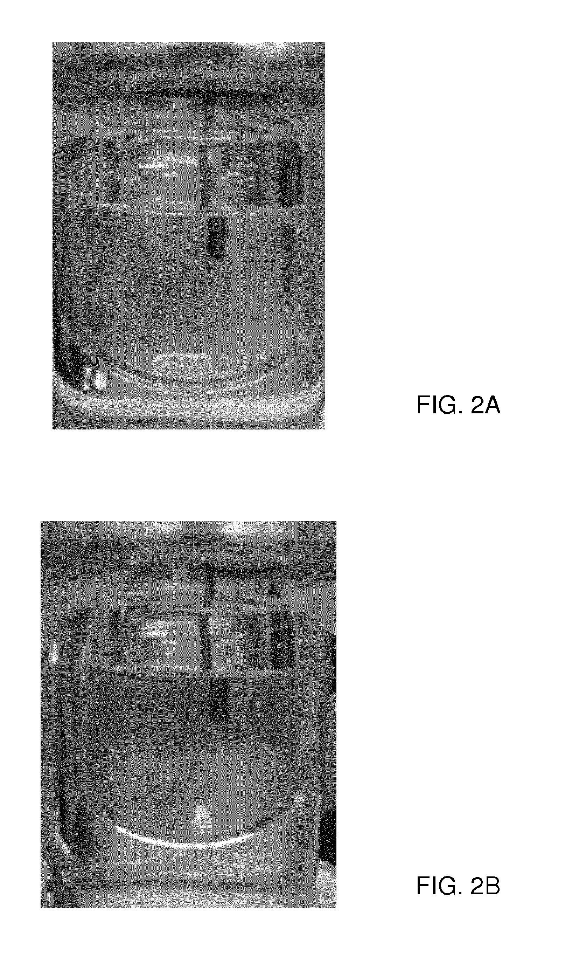

Figure 2 shows photographs of absorption liquids. Figure 2A shows a homogenous mixture of a mixture of chemical solvents namely mono-ethanolamine (MEA) and methyldiethanolamine (MDEA) and a physical solvent namely sulpholane in water. Figure 2B shows the mixture after phase separation thereof upon CO₂ absorption, with the physical solvent at the bottom and the chemical solvent on top. Some of the characteristics of the two phases for a mixture, partially loaded with CO₂, are given in the table 1. The chemical solvent is richer in CO₂, has a lower density and contains more water. It is important to note that at higher CO₂ partial pressures, the CO₂ concentration and the density of Phase 2 will increase.

**Table 1**

| Property | Phase 1 | Phase 2 |
|---|---|---|
| CO₂ concentration | 3.7 | 0.14 |
| [mol/l] | | |
| Density | 1.21 | 1.25 |
| [g/ml] | | |
| Water content | 22 | 5 |
| [%] | | |

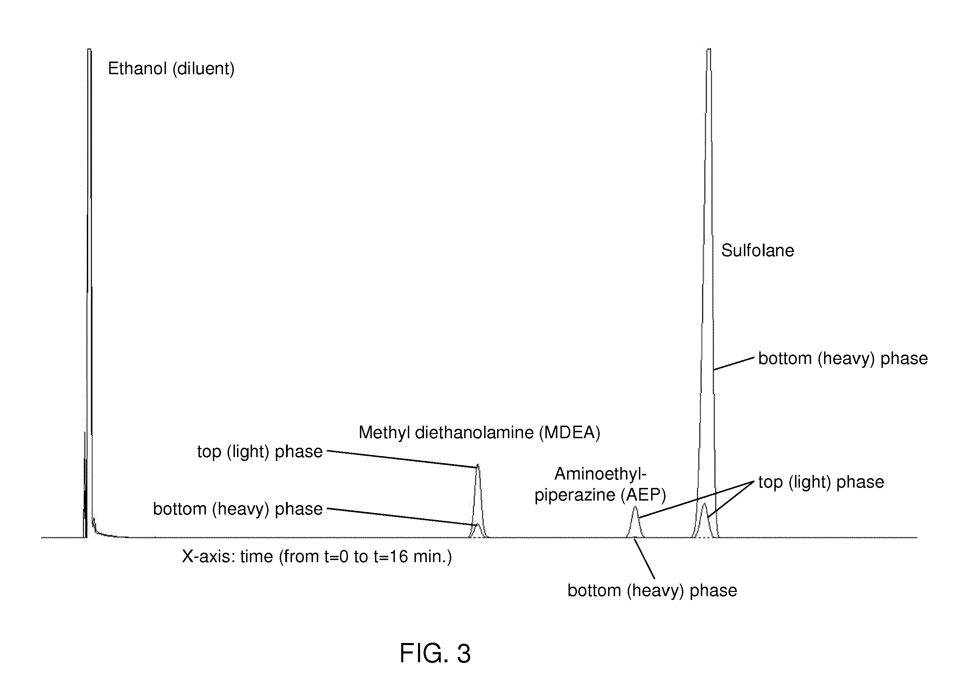

Figure 3 shows gas chromatography spectra of the loaded mixture, the phase split top and the phase split bottom part, respectively. One can observe that the top part is indeed depleted of sulpholane and the bottom part depleted of the amines.

## Claims

1. A method for reducing the content of at least one gaseous component selected from the group consisting of CO₂ and H₂S in a gaseous mixture comprising such component, the method comprising
- contacting in an absorption zone said gaseous mixture with absorption liquid, wherein said absorption liquid comprises a first liquid component and a second liquid component, thereby causing absorption of at least some of said gaseous component from said gaseous mixture into said first liquid component and into said second liquid component, yielding a stream of absorption liquid comprising a thus absorbed component, wherein said stream of absorption liquid is phase separated in a first phase predominantly comprising said first liquid component and a second phase predominantly comprising said second liquid component,
- separating said first phase and said second phase at least partly from each other to yield a first liquid stream comprising first liquid component and absorbed component and a second liquid stream comprising second liquid component and absorbed component, and
- desorbing under first desorption conditions said absorbed component from said first liquid stream in a first desorption step yielding a first released desorbed component and a regenerated first stream, and desorbing under second desorption conditions which are different from said first desorption conditions said absorbed component from said second liquid stream in a second desorption step yielding a second released desorbed component and a regenerated second stream,
wherein the first liquid component is a chemical solvent and wherein the second liquid component is not a chemical solvent, and wherein the first liquid component and the second liquid component have different desorption characteristics for said gaseous component.

2. Method according to claim 1, wherein said first liquid component comprises one or more amines, preferably one or more selected from the group consisting of 2-amino-ethanol, diisopropylamine, diethanolamine, diethylethanolamine, triethanolamine, aminoethoxyethanol, 2-amino-2-methyl-1-propanol, dimethylaminopropanol, methyldiisopropanolamine, aminoethylpiperazine, piperazine, 2-amino-1-butanol, methyldiethanolamine, and any mixture thereof.

3. Method according to claim 1 or 2, wherein said second liquid component is selected from the group consisting of sulpholane, 3-methylsulpholane, dimethylsulphoxide, thiodiglycol, dithiodiglycol, *N*-methylpyrrolidone, methanol, tributyl phosphate, *N*-β-hydroxyethylmorpholine, propylene carbonate, methoxytriglycol, dimethyl ether of polyethylene glycol, and mixtures of polyethylene glycol dialkyl ethers.

4. Method according to any one of claims 1-3, wherein said first liquid component comprises water.

5. Method according to any one of claims 1-4, wherein said first liquid component comprises two or more different molecules, preferably three or more different molecules.

6. Method according to any one of claims 1-5, wherein said gaseous mixture further comprises a hydrocarbon and/or hydrogen.

7. Method according to any one of claims 1-6, wherein said first desorption step comprises thermal regeneration and said second desorption step comprises flashing.

8. Method according to any one of claims 1-7, wherein said first liquid phase and said second liquid phase have a different volumetric density and wherein the separation of said first liquid phase and second liquid phase comprises separation by gravity, such as decanting, or centrifugation.

9. Method according to any one of claims 1-8, further comprising providing said regenerated first stream and said second stream to said absorption zone, wherein 60 % or more by total weight of said first liquid stream is provided closer to the inlet of said absorption zone for the gaseous mixture than 60 % or more by total weight of said second liquid stream.

10. Method according to any one of claims 1-9, wherein said second desorption step involves no heating of said second liquid stream, or heating said second liquid stream by a temperature increase at least 20 °C less than a temperature increase of said first liquid stream during said first desorption step.

11. Method according to any one of claims 1-10, wherein said first released desorbed component comprises CO₂ and H₂S, wherein the method further comprises submitting said first desorbed component to a Claus process without further reduction of the CO₂ concentration of said first desorbed component.

12. Method according to any of claims 1-11, wherein said method further reduces the content of at least one gaseous component selected from the group consisting of organosulphur compounds and mercaptanes that are comprised in the gaseous mixture.

13. Method according to any one of claims 1-12, wherein said absorption liquid comprises water as a third liquid component.

14. Apparatus for performing a method according to any of claim 1-13, comprising:
- a contactor comprising an inlet and an outlet for a gaseous stream and at least one inlet and outlet for absorption liquid,
- a separation unit for separating said absorption liquid, comprising an inlet for absorption liquid having a connection to the outlet for absorption liquid of said contactor, a first outlet for a first separated stream and a second outlet for a second separated stream of said absorption liquid,
- a first regeneration unit, preferably a thermal stripper, having an inlet for said first separated stream, said inlet having a connection to said first outlet of said separation unit, and having a first outlet for a gaseous stream and a second outlet having a connection to an inlet for absorption liquid of said contactor, and
- a second desorption unit, preferably a pressure swing vessel, having an inlet for said second separated stream, having a connection to said second outlet of said separation unit, and having a first outlet for a gaseous stream and a second outlet for a first regenerated stream of said absorption liquid, said second outlet having a connection to an inlet for absorption liquid of said contactor.

15. An apparatus according to claim 14, further comprising a flash vessel between the separation unit and the first regeneration unit.
